# EUROPÄISCHE PATENTSCHRIFT

(11) **EP 0 522 102 B1**
(45) Veröffentlichungstag und Bekanntmachung des Hinweises auf die Patenterteilung: **13.12.1995**
(21) Anmeldenummer: 92901777.0
(22) Anmeldetag: 13.01.1992
(51) Int. Cl.: B65B 1/32, G01G 13/08, G01G 11/08

(54) **VERFAHREN ZUM ABSACKEN VORGEGEBENER SCHÜTTGUT-FÜLLMENGEN SOWIE EINE SCHÜTTGUT-ABSACKVORRICHTUNG**
PROCESS AND DEVICE FOR PREPARING PRECISELY WEIGHED, PREDEFINED FILLING QUANTITIES OF BULK MATERIALS
PROCEDE ET DISPOSITIF DE REMPLISSAGE UTILES POUR PREPARER DES VOLUMES PREDEFINIS DE REMPLISSAGE EN MATIERES EN VRAC AYANT UN POIDS PRECIS

(30) Priorität: 29.01.1991 CH 272/91; 15.03.1991 CH 795/91
(43) Veröffentlichungstag der Anmeldung: 13.01.1993
(73) Patentinhaber: Bühler AG, 9240 Uzwil (CH)
(72) Erfinder: NÄF, Peter, CH-9410 Heiden (CH)
(74) Vertreter: Turi, Michael, Dipl.-Phys.
(86) Internationale Anmeldenummer: CH9200006
(87) Internationale Veröffentlichungsnummer: WO9212899

(56) Entgegenhaltungen:
- EP-A- 0 288 415
- EP-A- 0 346 610
- EP-A- 0 348 077
- WO-A-83/04306
- WO-A-86/05875
- WO-A-89/07574
- WO-A-91/11689
- FR-A- 2 384 246
- WAGEN+DOSIEREN Nr. 6, 20. November 1989, MAINZ Seiten 241 - 245; R. URBAN: 'GRAVIMETRISCH DOSIEREN - MIT BANDWAAGE ODER DIFFERENTIALWAAGE'

## Beschreibung

### Technisches Gebiet

Die Erfindung betrifft ein Verfahren zum Absacken vorgegebener Schüttgut-Füllgewichte in Transportgebinde, insbesondere in Säcke, sowie eine Schüttgut-Absackvorrichtung mit einer Waage und einer Steuervorrichtung, welche vorgegebene Schüttgut-Füllmengen aus einem Wägebehälter in Transportgebinde austrägt.

### Stand der Technik

Neben den klassischen Transportgebinden kennt man im Bereich der sogenannten Verpackungsindustrie spezialisierte Abfüll- und Verpackungseinrichtungen für Konsumgebinde. Im Regelfall werden dabei Füllmengen von einigen hundert Gramm, höchstens einigen kg erstellt. 5 - 10 kg Gewichte werden im Regelfall als obere Grenze empfunden. Die Grösse ist angepasst für ein leichtes Handhaben für Verkauf und Konsument, respektiv vom Verkaufsladen zum Endverbraucher, zum Beispiel in der Küche. Transportgebinde dienen vorwiegend für den Transport von einem Verarbeitungsbetrieb zum nächstfolgenden, im klassischen Fall von der Mühle zum Bäcker. Das Gewicht von Transportgebinden, meistens angepasst an männliche Mitarbeiter, liegt Zwischen 20 und 100 kg.

In der Praxis bildeten sich für die Abfüllung von Transportsäcken drei Automatisierungsstufen heraus, entsprechend den spezifischen Anforderungen:
- automatische Portionenbereitstellung Anhängen und Verschliessen des Sackes von Hand
- automatische Portionenbereitstellung Anhängen der Säcke von Hand vollautomatische Verschliessung der Säcke
- automatische Portionenbereitstellung vollautomatische Sackanhängung und Sackverschliessung
Daraus ist ersichtlich, dass in jedem Fall die Portionenbereitstellung die Basis für alle Automatisierungsstufen ist. Das Kernproblem liegt darin, in einer kleinen Zeitspanne Schüttgutportionen zu bilden und präzise abzuwägen. Ein und dasselbe Schüttgut kann sich verschieden verhalten, ob das Gut während dem Transport sich mit Luft vermischen konnte und ein mehr oder weniger flüssigkeitsähnliches Verhalten bekommen hat, oder ob extreme Bedingungen wie Wärme oder Kälte auch der Maschinenelemente und daraus resultierende Haftkräfte zwischen Schüttgut und Wandteilen stören.

Im Vergleich zu den Dimensionen von Lager-Siloanlagen stellen die Sackinhalte kleine Portionen dar. Trotzdem ergeben sich für die Dimensionierung von Abfülleinrichtungen zum Beispiel von Zwischendepots grosse Abmessungen. Wenn von Raumnöhen von 3 bis 4 m ausgegangen wird, nehmen die Absackeinrichtungen 1 - 2 Stockwerke in Anspruch.

Nach der Schüttwaage wird meistens eine Waagenschütttrimelle verwendet, damit der volle Waageninhalt vor dem Sack in einem Zwischenpuffer aufgefangen wird, was ebenfalls Höhe benötigt.

Entgegen der Praxis der vergangenen zwei Jahrzehnte, den Sack durch Tank- und Grossbehältertransport zu ersetzen, besteht nun wieder eine umgekehrte Tendenz zum Klein-Transportgebinde, also dem Sack. In vielen Ländern verlangen Berufsverbände eine Reduzierung des Sackgewichtes von zum Beispiel 50 auf 25 kg, was bei gleicher Ausstosstonage eine Verdoppelung der Anzahl Säcke mit sich bringt. Deshalb sind zunehmend Absackstationen mit einer sehr hohen Stückzahl-Leistung gefragt. Für speziell feine Industrie-Produkte wie Zement, Kalk, Kunststoffe usw. sind die sogenannten Ventilsäcke am meisten verbreitet. Das Produkt wird über einen schnabelartigen Füllstutzen durch eine entsprechend kleine Ventilöffnung des Sackes eingefüllt. Nach Erreichen des gewünschten Gewichtes kann die Sacköffnung durch vorbereitete Papierfalten sofort verschlossen werden.

Der enorme Vorteil liegt darin, dass das Produkt nur sehr wenig mit Luft vermischt wird. Der Hauptnachteil dieses Systems liegt in der beschränkten Einsatzfähigkeit. Getreide, Griess, Mehl, Kleie und Futtermittel usw. haben bekanntlich stark unterschiedliche Schütt-Gewichte, so dass in die selbe Sackgrösse bei unterschiedlichen Produkten verschiedene Gewichte abgefüllt werden.

Bei den klassischen Mehlsäcken stört eine geringe Menge Leerraum im gefüllten, verschlossenen Papier- oder Plastiksack dagegen nicht, da dieser Sack nach der Füllung, sei es mit einer Nähmaschine oder mittels Leim, dicht verschlossen wird.

Der Sack eignet sich für einen einfachen Stückguttransport über grössere Distanzen und ist vor Ort in vielerlei Hinsicht eine bequeme Einheit für ein optimales "Handling". Je nach spezifischem Gut sind besondere Kriterien, wie Fragen der Hygiene, staubfrei, pralle Sackfüllung, im Vordergrund. In fast allen Fällen wird vom Abnehmer präzises Füllgewicht jedes einzelnen Sackes verlangt. Nur durch einen hohen Automatisierungsgrad lassen sich aber kostengünstig eine grosse Zahl Säcke pro Stunde gewichtsgenau abfüllen. Vom Gesetzgeber müssen in der Regel bei den sogenannten Nettoabsackwaagen über Eichvorschriften gewisse methodische Spielregeln eingehalten werden. Für die Erstellung einer vordefinierten Füllmenge ergibt sich daraus folgender Wägeablauf:
- 0-Tarierung des Wägebehälters
- Grobdosierung
- Feindosierung
- Stillstand
- Kontrolle der Abfüllmenge bzw. des Sollgewichtes
- evtl. Korrektur des Grobstrom- und /oder des Feinstromabschaltpunktes

Bei höheren Absackleistungen kann die 0-Tarierung sowie die Kontrolle der Abfüllmenge und daraus resultierend die Korrektur des Feinstromabschaltpunktes nur noch zyklisch, das heisst zum Beispiel bei jeder 20. Schüttung, erfolgen. Folgende Verwiegeeinflussgrössen sind zudem zu berücksichtigen:
- Der Pralldruck des Grob- und Feinstromes
- Der Dopplereffekt
- Der Nachstrom des Grob- und Feinstromes
- Die Unterschiedliche Fallhöhe bei unterschiedlichen Absackgewichten.

Über Jahrzehnte entstand für die besondere Aufgabenstellung die sogenannte Absackwaage, am weitesten verbreitet als Nettoabsackwaage. In der Absackwaage selbst wird das vorbestimmte Portionengewicht wägegenau vorbereitet, welches nach Anhängung eines leeren Sackes an einen Sackstutzen in der kürzest möglichen Zeit in den Sack abgefüllt wird. Auf diese Weise werden mehrere 100 bis über 1000 Portionen pro Stunde bereitgestellt und das Produkt in die entsprechende Zahl Säcke abgefüllt. In vielen Einsätzen werden heute wesentlich grössere Leistungen verlangt, zum Beispiel bis zu 2000 Portionen pro Stunde.

Aus der EP 348 610 A2 ist eine Absackanlage bekannt, welche zur Verpackung von Mehrstoffgemischen geeignet ist, wobei die Einzelkomponenten abgewogen, dosiert und verpackt werden. Dazu sind einzelne Abfüllstationen der Absackanlage mit kombinierten Austrags-, Wiege- und Übergabevorrichtungen bestückt, welche die Einzelkomponenten einzeln behandeln.

Aus der EP 288 415 A2 ist eine Absackvorrichtung zum gravimetrischen Abfüllen von Schüttgutmengen aus einem Vorratsbehälter über ein Grobdosiersystem und ein Feindosiersystem bekannt.

In beiden bekannten Absackvorrichtungen (EP 348 610 A2 und EP 288 415 A2) wird das Schüttgut solange in einen separaten Wägebehälter gefüllt, bis das gemessene Gewicht an Schüttgut in dem Behälter genau einer Sackfüllung entspricht. Anschließend wird die gesamte Behälterfüllung als eine Sackfüllung in einen Sack abgefüllt. Während dieser Zeit wird die Austragung des Schüttguts aus dem Vorrat in den Wägebehälter gestoppt.

Die EP 348 077 A1 zeigt eine Absackvorrichtung, in welcher das Schüttgut direkt in einen Sack abgefüllt und dort verwogen wird. Es wird dabei solange abgefüllt, bis das Gewicht des Schüttguts im Sack dem gewünschten Sackfüllgewicht entspricht. Anschließend wird die Abfüllung gestoppt, der gefüllte Sack abgehängt, ein neuer Sack angehängt und erst danach der gesamte Vorgang wiederholt.

Alle og. Absackvorrichtungen gehören zur Gattung der Nettoabsackwaagen, welche die nachfolgend beschriebenen Nachteile aufweisen.

In dem Artikel "Gravimetrisch Dosieren- mit Bandwaage oder Differentialwaage" der Fachzeitschrift "Wagen und Dosieren", Nr. 6, Nov. 1989, dem Handbuch "Handbuch des Wägens", Manfred Kochsiek, Friedr. Vieweg & Sohn, 1985, S. 335-339, und den Firmenprospekten "Continuous Weighing and Feeding Equipment", F 9100 e sowie "Peser et doser en continu", F 9100 f der Firma Schenk wird eine Differential-Dosierwaage beschrieben, welche Schüttgut mittels einer Austragseinrichtung aus einem Wägebehälter austrägt. Die Austragsmenge richtet sich nach der Gewichtsabnahme der Schüttgut-Menge pro Zeiteinheit in dem Wägebehälter. Dieser Vorgang ist in der einschlägigen Literatur unter dem Begriff "Differentialdosierverwiegung" bekannt. Das Ziel derartiger Differential-Dosierwaagen ist, kontinuierlich eine vorgegebene, zeitlich konstante Schüttgutmenge - einen kontinuierlichen Schüttgut-Strom - zu erzeugen. Zur Erzeugung dieses kontinuierlichen Stroms muß der Wägebehälter zyklisch mit Schüttgut nachgeladen werden. Da während der Nachladezeit keine Gewichtsabnahme des Schüttguts in dem Wägebehälter gemessen werden kann, schaltet die Differential-Dosierwaage auf eine volumetrische Austragung um. Hierzu wird die Austrageeinrichtung eine kurze Zeit lang mit derselben Geschwindigkeit weitergesteuert, welche zuvor bei der Differentialdosierverwiegung ermittelt wurde.

Die WO 86 05875 zeigt eine Vorrichtung zum automatischen Erfassen eines kontinuierlichen Schüttgut-Durchsatzes mittels einer Durchlaufwaage, bestehend aus einem Wägebehälter und einem einstellbaren Verschlußorgan zur Einstellung des Austrittsquerschnittes des Wägebehälters. Diese Vorrichtung erfaßt ununterbrochen die sich zeitlich ändernde Menge an vorbei- bzw. hindurchströmenden Schüttgut.

Nettoabsackwaagen entleeren das Füllgewicht plötzlich und mit sehr hoher Leistung. Daraus entstehen einige ernst zu nehmende Probleme. Der Sack bläht sich durch die Luftverdrängung durch die Befüllung stark auf und belastet zusätzlich das Sackmaterial. Zudem nimmt die Schüttung während der Entleerung bei pulverartigen Produkten eine beachtliche Menge Luft auf, so dass die Entlüftung des Sackstutzens ein weiteres, bekanntes Problem darstellt. Der Sackstutzen muss auch aus Gründen einer optimalen Entlüftung und raschen Befüllung möglichst gross gewählt werden. Zur Erreichung hoher Leistungen wird ein hoher Automatisierungsgrad vorausgesetzt und deshalb ein automatischer Sackanhänger eingesetzt. Grosse Sackstutzen beeinträchtigen aber die Funktionssicherheit eines mechanischen Sackbehängers erheblich. Für Produkte, die durch Verdichtungselemente in ihrem Volumen reduziert werden können, um die Fertigpackung zu verkleinern beziehungsweise teures Sackmaterial zu sparen, erhöht sich die Verdichtungszeit aufgrund der starken Fluidisierung des Produktes und reduziert die Absackleistung.

Als Verbindung von der Waage zum Sackstutzen wird ein Waagen-Schütt-Trichter eingesetzt. Behangserscheinungen in diesem Trichter beeinflussen einerseits die Gewichtsgenauigkeit der Packung und andererseits die Hygiene sehr negativ. Speziell bei Produkten die stark zum Haften neigen ist eine häufige Reinigung besonders des Schütttrichters unvermeidlich.

Eines der Ziele der Erfindung war die Reduzierung der Bauhöhe, bedingt duch die Behältertechnik, und insbesondere mögliche Störeinflüsse auf dem Verschiebeweg des Schüttgutes so tief wie möglich zu halten.

### Darstellung der Erfindung

Der Erfindung wurde insbesondere die Aufgabe gestellt, die bekannten Nachteile so weit wie möglich zu beheben, den Packvorgang zu verkürzen, das heisst die Leistung zu erhöhen.

Die Erfindung löst diese Aufgabe durch die Gegenstände der Ansprüche 1 und 4.

Nach Anspruch 1 ist ein Verfahren zum Absacken vorgegebener Schüttgut-Füllgewichte aus einem Wägebehälter in Transportgebinde, insbesondere in Säcke, vorgesehen, bei welchem die aus dem Wägebehälter in die Transportgebinde jeweils ausgetragenen Schüttgutmengen über eine differentielle Gewichtsabnahme des Wägebehälters gravimetrisch ermittelt (im folgenden auch Differentialverwiegung) und dabei der Schüttgutmengen-Austrag auf das vorgegebene Schüttgut-Füllgewicht gesteuert wird.

Im folgenden sollen die Begriffe Differentialverwiegung und Differentialdosierverwiegung klar unterschieden werden.

Bei der Differentialverwiegung wird nur die Gewichtsabnahme eines zu einem Anfangszeitpunkt vorliegenden Startgewichts verfolgt. Dazu wird der Wägebehälter mit einer ungefähr bekannten Schüttgutmenge befüllt und das Gewicht des Wägebehälters samt Schüttgut bestimmt. Anschließend wird solange Schüttgut aus dem Wägebehälter ausgetragen, bis die Differenz des momentan vorliegenden Gewichts von Wägebehälter und Schüttgut zum Startgewicht genau einem vorgegebenen Schüttgut-Füllgewicht entspricht. Dabei spielt es keine Rolle, welche Gewichtsmenge innerhalb eines bestimmten Zeitabschnitts ausgetragen wird. So kann beispielsweise anfangs eine sehr große Schüttgutmenge innerhalb kurzer Zeit ausgetragen werden. Anschließend wird dann umso langsamer ausgetragen, je stärker sich das Differenzgewicht dem vorgegebenen Schüttgut-Füllgewicht nähert.

Bei einer Differentialdosierverwiegung hingegen wird pro Zeiteinheit ein bestimmtes Gewicht an Schüttgut kontinuierlich ausgetragen, beispielsweise 10 kg Schüttgut pro Sekunde.

Wie in der Folge gezeigt wird, ist mit der Erfindung ein Durchbruch für die Erhöhung des Automatisierungsgrades, der Betriebssicherheit, der Betriebshygiene, insbesondere aber im Hinblick auf die Leistungsfähigkeit gelungen. Die gesamte mit der Absackung betraute Fachwelt hatte bisher versucht, mit enormen Aufwendungen, aber nur teilweisem Erfolg, die störenden Einflussgrössen unter Kontrolle zu bringen.

Ein wesentlicher Teil der Störeffekte ist aber mit der neuen Erfindung ganz einfach nicht mehr vorhanden, so zum Beispiel:
- kein Pralldruck des Grob- und Feinstromes
- kein Dopplereffekt
- kein Nachstrom des Grob- und Feinstromes
- keine variierende Fallhöhe
- keine Waagenschütttrimelle und entsprechende Staubzone
- keine Wechselstutzen
Eine weitere Gruppe von Störquellen konnte in ihrem Einfluss drastisch gemindert werden:
- es tritt nur noch eine minimale Fluidisierung auf
- der Aufwand für die Verdichtung des Schüttgutes im Sack und die Notwendigkeit der Sackrüttelung ist minimiert
- wesentliche Verkleinerung des Sackstutzens
Die Erfindung erlaubt eine grosse Zahl besonders vorteilhafter Ausgestaltungen.

Es wird vorgeschlagen, dass die Abfüllportionen durch Steuerung der Austragung aus einer Differential-Absackwaage über die Ermittlung des Differentialgewichtes zyklisch bereitgestellt und über einen Absackstutzen direkt in Säcke abgefüllt werden.

Dazu weist das Differentialwägesystem einen Differentialwägebehälter mit Schüttgutzudosierung und einer gesteuerten Produktaustragung sowie Rechnermittel auf, welche von Gewichtswerten des Wägesystems sowohl den Sack- wie den Wägebehälter-Füllvorgang steuern.

Bevorzugt erfolgt zyklisch, abwechselnd nach jeder oder nach mehreren Abfüllungen eine Nachfüllung des Differentialwaagebehälters. Es wird in der Differentialwaage das 1,5 bis höchstens das 5-fache, bevorzugt das 1,5 bis 3-fache einer Portion bereitgestellt, woraus Transportsäcke von 10 bis 100 kg Gewicht abgefüllt werden können.

Nach Anspruch 4 ist eine Schüttgut-Absackvorrichtung mit einer Waage und einer Steuervorrichtung vorgesehen, welche vorgegebene Schüttgut-Füllmengen aus einem Wägebehälter in Transportgebinde austrägt, wobei die Waage als gesteuerte Differential-Waage ausgelegt ist, welche die aus dem Wägebehälter in die Transportgebinde jeweils ausgetragenen Schüttgutmengen über eine differentielle Gewichtsabnahme des Wägebehälters gravimetrisch erfaßt und dabei den Schüttgutmengen-Austrag auf das vorgegebene Schüttgut-Füllgewicht steuert.

Damit lässt sich nicht nur die ganze Füllvorrichtung einfacher, niedriger und hygienischer bauen, sondern erlaubt einen enormen Automatisierungsschritt, so dass auch das Ziel der Verdoppelung der Absackleistung ohne Nachteile erreichbar ist.

Die erfindungsgemässe Vorrichtung kann mannigfacherweise weiter ausgestaltet werden. So mündet in einer bevorzugten Ausführungsform der Produktaustrag der Differential-Absackwaage (1) direkt in einen Fliessbefüllstutzen einer Sackanhängevorrichtung. Der Verwiegungsvorgang kann dadurch verbessert werden, dass am Ende des Austragsbereiches der Differential-Absackwaage eine steuerbare Verschliesseinrichtung angeordnet ist.

Für Produkte mit ungünstigem Fliessverhalten wird vorgeschlagen, dass die Vorrichtung einen aufrechten Waagebehälter, eine drehzahlsteuerbare Austragschnecke mit einem im wesentlichen horizontal gerichteten Austrag aus dem Waagebehälter, sowie ein Überleitstück von dem Waagebehälter zu der Austragschnecke und Differential-Wägeelementen aufweist, wobei der Austrag über die Schwerkraft direkt in den Absackstutzen mündet. Vorzugsweise weist dabei die Differential-Absackwaage sowohl eine Grob- wie eine Feindosierung auf, wobei der Grob- und der Feinaustrag als gesteuerte Zwangsaustragselemente, vorzugsweise Austragschnecken ausgebildet sind. Für freifliessfähige Produkte wird dagegen vorgeschlagen, dass die Produktaustragvorrichtung als Dosierung mit steuerbaren Dosierschiebern ausgebildet ist.

Bei einer weiteren ganz besonders bevorzugten Ausgestaltung der Erfindung wird die Differential-Absackwaage einem Absackkarussell zugeordnet und übergibt im Zyklus des Absackkarussells die je vorbestimmten Portionen über einen Absackstutzen, respektiv Fliessbefüllstutzen zur Absackung.

Für die Ausbildung von höchsten Absackleistungen werden in einer Anlage vorzugsweise zwei oder mehrere Differential-Absackwaagen einem Fliessbefüllstutzen eines Absackkarussells zugeordnet. Es können dabei entweder im Tandembetrieb oder kurzzeitig mit doppelter Stundenleistung die Portionen bereitgestellt werden.

Als besonders vorteilhaft hat es sich erwiesen, wenn der Fliessbefüllstutzen einen freien Durchtrittsquerschnitt, der kleiner ist oder etwa dem Querschnitt des Produktaustrages aus dem Waagebehälter entspricht, aufweist. Diese Massnahme erlaubt ebenfalls eine Steigerung der Automatisierung, da ein kleiner Sackstutzen einfacher ist, um die raschen mechanischen Bewegungen des Sackanhängers durchzuführen. Zudem kann für einen grossen Bereich von zum Beispiel 20 bis 100 kg Säcke der gleiche Absackstutzen verwendet werden.

Die Hochleistungsabsackstationen weisen bevorzugt zwei Grobdosierwaagen sowie eine Feindosierwaage mit zugeordneten Rechnermitteln und das Absackkarussel 3 - 6 Fliessbefüllstutzen auf.

Diese Konstellation erlaubt, Programme für eine exakte Kontrolle der Produktverschiebung zu erstellen, so dass zum Beispiel nach einer bestimmten Produktmenge, die abgesackt werden muss, nirgends Produktreste bleiben. Auch können mit der gleichen Absackeinrichtung Produktwechsel schneller vorbereitet und durchgeführt werden.

In der Folge wird die Erfindung anhand einiger Ausführungsbeispiele mit weiteren Einzelheiten erläutert.

### Kurze Beschreibung der Erfindung

Es zeigen:
- die Figur 1: schematisch eine Einfachabsackstation mit einer Differential-Absackwaage;
- die Figur 2: die Differentialverwiegung im Zusammenspiel mit einem Absackkarussell;
- die Figur 2a: das Ablaufspiel der Hauptabsackbewegung;
- die Figur 3,3a: Verwiegeprinzip einer Netto-Absackwaage
- die Figur 4: ein Gewicht-Zeitdiagramm einer Netto-Absackwaage des Standes der Technik;
- die Figur 5: ein Gewicht-Zeitdiagramm der neuen Differential-Absackwaage;
- die Figur 6: ein Dispositiv für eine Hochleistungsabsackung zum Beispiel für 1200 Säcke pro Stunde;
- die Figur 6a: stellt den Bewegungsablauf von der Figur 6 dar, analog Figur 2a;
- die Figur 7: eine Lösung analog zu der Figur 1 jedoch mit Sackpackmaschine;
- die Figur 8: ein 4-Stutzen-Absackkarussell für rieselfähige Schüttgüter;
- die Figur 9: eine Differential-Absackwaage für schwerfliessfähige Güter in grösserem Massstab;

### Wege zur Ausführung der Erfindung

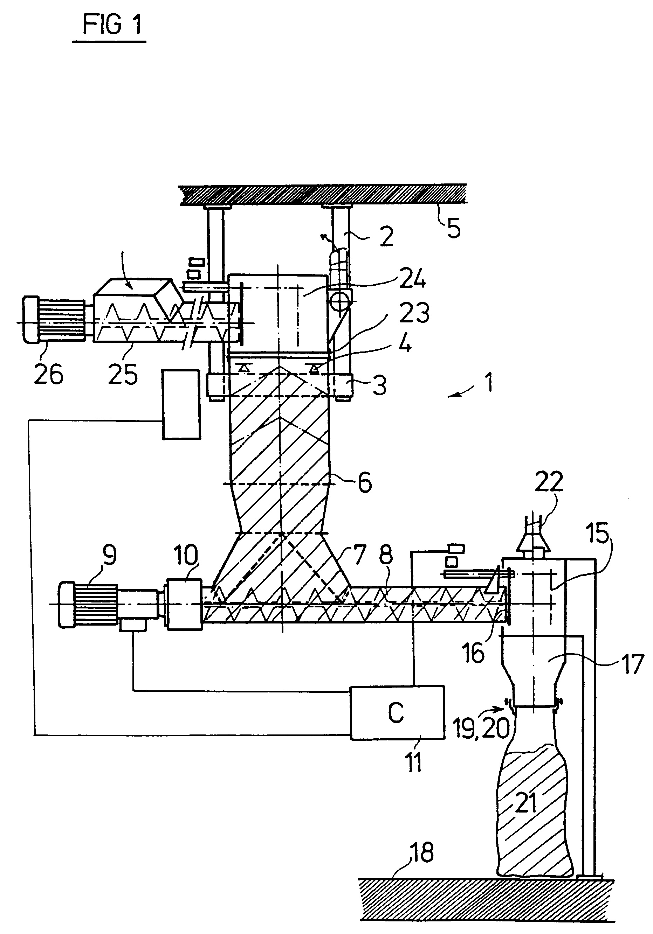

Es wird nun auf die Figur 1 Bezug genommen. Eine Differentialwaage 1 ist über Säulen 2, einer Plattform 3 sowie Gewichtserfasselemente 4 abgestützt, respektiv an der Decke 5 aufgehängt.

Die Differentialwaage 1 besteht im wesentlichen aus einem Wägebehälter 6, einem Überleitstück 7 und einer Zwangsaustragschnecke 8, welche von einem Antriebsmotor 9 über ein Getriebe 10 angetrieben und von einem Rechner 11 gesteuert wird. Die Grob- und Feinstromdosierung kann mit einer Dosierschnecke mit 2 Tourenzahlen oder die Feinstromdosierung über eine separat angetriebene, nicht gezeichnete, Feinstromschnecke erfolgen.

Damit von der Speisung 8 kein unkontrollierbarer Nachlauf entsteht, wird die Austrittsöffnung 16 über eine Klappe 15 über den Rechner 11 steuerbar geöffnet und geschlossen. Ein Absackkopf 17, der unabhängig von der Differentialwaage 1 auf dem Boden 18 abgestützt ist, weist einen Absackstutzen 19 sowie einen Sackhalter 20 auf, welcher in Figur 1 einen Sack 21 festgeklemmt hält. Die von dem Produkt in dem Sack 21 verdrängte Luft kann über eine Aspiration 22 entweichen. Über eine Gummimembran 23 ist ein Produktspeisekopf 24 staubdicht mit dem Wägebehälter 6 verbunden. In den Speisekopf 24 mündet ein Produktspeiseförderer 25, welcher über einen Antriebsmotor 6 zyklisch von dem Rechner 11, respektiv entsprechend dem Waagensignal, gesteuert wird.

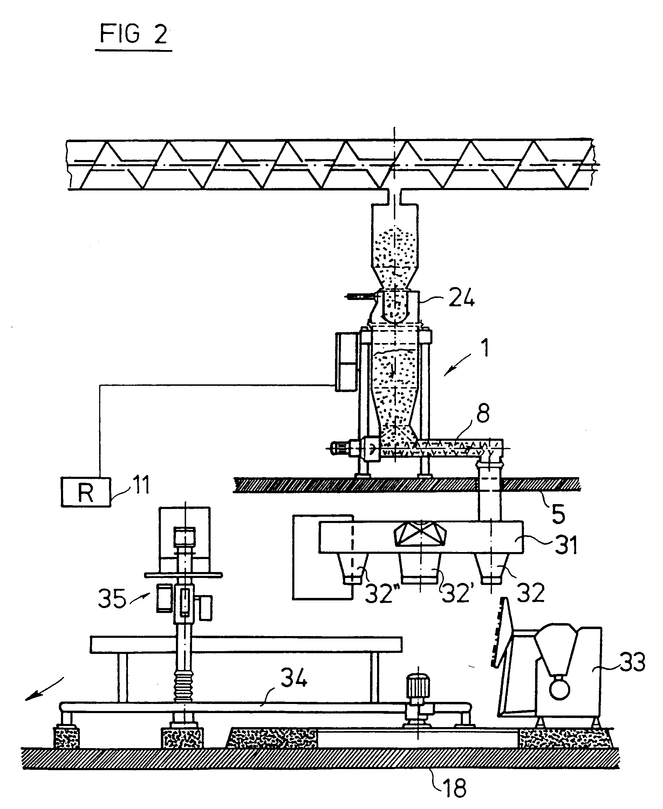

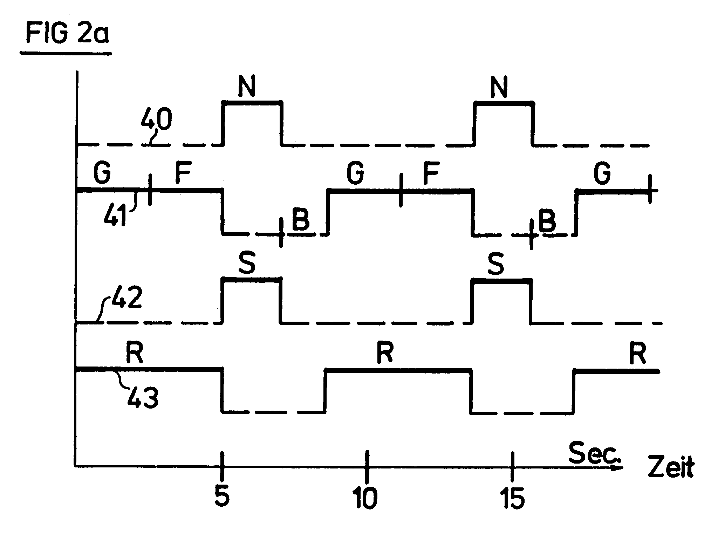

In der Figur 2 ist eine Differentialwaage 1 direkt über einem Absackkarussell 31 dargestellt, an welchem Absackstutzen 32, 32', 32'' sichtbar sind. Wichtig ist dabei auch, dass der Sack, besonders bei Faltensäcken, gleichmässig von unten bis oben mit dem Produkt gefüllt ist. Ein Verdichtungssystem, zum Beispiel ein Seitenpacker 33, verdichtet das Produkt in dem Sack durch Rüttel- und Schwingbewegungen sehr effizient während der Grob- und Feindosierung gleich intensiv von unten nach oben. Je nach Problemstellung kann auch ein zweiter Seitenpacker 33 zum Einsatz kommen, dies hinter einem Absackstutzen 32' oder 32''. Nach Beendigung der Sackfüllung und der Sackrüttelung wird der Sack auf ein Förderband 34 abgesetzt und durch eine Verschliessstation 35 geführt und für den Wegtransport bereitgestellt.

In der Figur 2a ist ein zeitliches Ablaufschema, zum Beispiel eines Absackkarussells nach der Figur 2 mit vier Absackstutzen, dargestellt, Die Kurve 36 gibt den zeitlichen Verlauf der Produktnachfüllung N in der Differentialwaage 1 an. Die Kurve 37 stellt den Verlauf der Produktaustragung aus der Differentialwaage 1 dar, wobei G der Grobstrom, F der Feinstrom und B die Beruhigungszeit für die Waage ist. Die Linie 38 stellt den zeitlichen Verlauf der Schrittbewegung des Karussells dar; S bedeutet die Zeit für eine Schrittbewegung eines Sackstutzens um 90°. In der Kurve 39 ist die Rüttelzeit R dargestellt, während der Seitenpacker 33 das Produkt verdichtet.

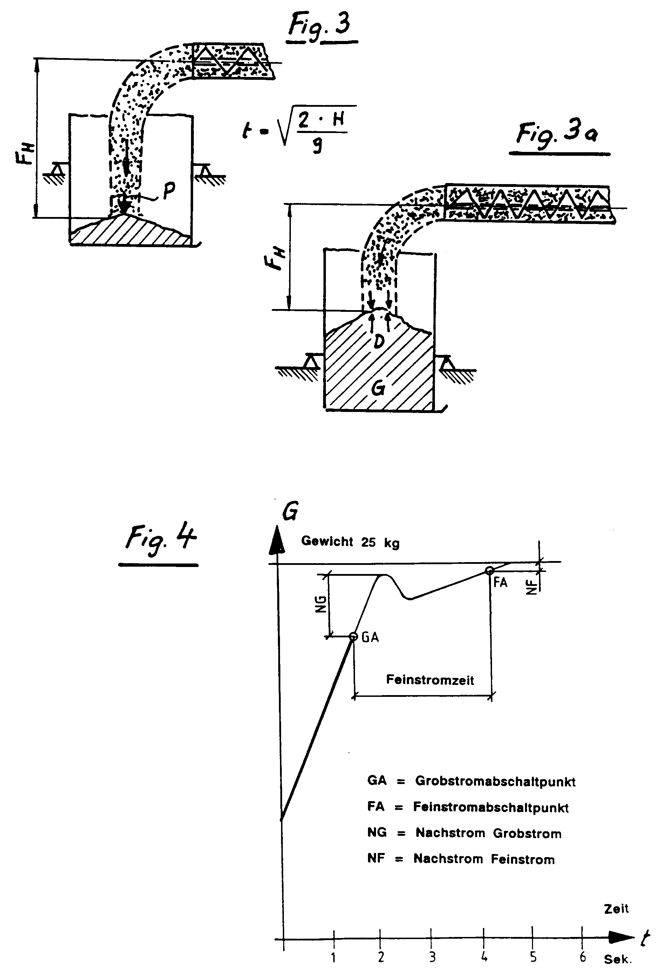

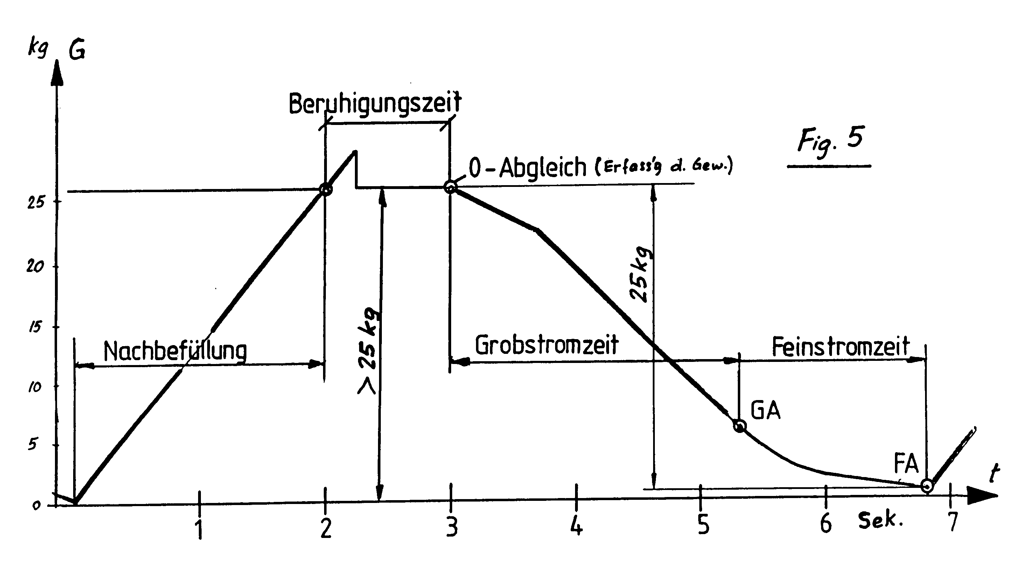

Die Figuren 3, 3a und 4 dienen der Erklärung der Fachausdrücke. Dabei bedeuten G = Produkt im Wägebehälter, P = Pralldruck, D = Dopplereffekt, N = Nachstrom, FH = Fallhöhe.

Die Figuren 3 und 3a zeigen, dass die Menge des Nachstromes (punktiert) abhängig ist von der Fallhöhe. In der Figur 3a ist der Nachstrom kleiner als in der Figur 3. Mit zunehmender Fallhöhe nimmt die Fallgeschwindigkeit des Schüttgutes zu. Je enger im Querschnitt das Wägegefäss ist, desto schneller steigt das Schüttgutniveau in dem Wägegefäss. Durch das nach oben Entgegenwachsen der Schüttgutsäule in der Waage gegen den fallenden Produktstrom entsteht ein analoges Phänomen, wie wenn zwei Autos aufeinander stossen. Die Aufprallkraft ist in beiden Fällen grösser, im Vergleich zum Aufprall auf einen stillstehenden Körper. In der Wiegetechnik nennt man dies den Dopplereffekt. Das effektive Endgewicht kann erst festgestellt werden, wenn auch der Nachstrom in dem Wägebehälter sich abgesetzt und die Waage sich beruhigt hat. Diese und andere Störfaktoren müssen bei jeder Schüttgutbehälterwaage berücksichtigt werden, zum Beispiel durch entsprechende Zeitverzögerungen. In der Wägetechnik ist ein Gewicht-Zeitdiagramm gemäss Figur 4 bekannt.

In der Figur 5 ist ein Gewicht-Zeitdiagramm in der Differential-Schüttwaage gemäss der neuen Lösung dargestellt. In dem gezeigten Beispiel ist ein Wechselspiel Waage füllen - Sack füllen dargestellt.

Für die Nachfüllung der Differentialschüttwaage werden ca. 1 - 2 Sekunden benötigt, bis ein Gewicht von ca. 25 kg erreicht ist. Ganz wesentlich ist hier, dass für die Nachfüllung mit Ausnahme der letzten Sackfüllmengen nicht auf ein genaues vordefiniertes Gewicht nachgesüllt werden muss, da nach der Nachbefüllung über die Stillstandsermittlung das exakte Gewicht in der Differential-Schüttwaage festgestellt und einem Rechner mitgeteilt wird. Danach wird das Abfüllgewicht mit dem System der Differentialverwiegung auf ein vordefiniertes Gewicht (FA) gesteuert ausgetragen, zuerst als Grobstrom und dann als Feinstrom. Das Abfüllgewicht ist innert ca. 4 Sekunden erreicht. Besonders interessant ist nun, dass mit dem Verschliessen der Austragsdosierorgane der DifferentialSchüttwaage, respektiv dem Moment des Verlassens der letzten Krümmel des Schüttgutes aus dem Wägeteil, sofort die exakte Ist-Gewichtsmessung in der Waage gilt. Der Nachstrom ist schon verwogen. Dopplereffekte, Pralldruck usw. haben bei dem Erstellen des Abfüllgewichtes erkennbar keinen Einfluss, da diese ausserhalb, respektiv nach der Verwiegung, stattfinden. Alle weiter oben aufgeführten Störfaktoren sind aus dem Bereich der Abfüllphase gebannt und in die Nachfüllphase verlagert und so für die Sackfüllung und Gewichtserstellung unschädlich gemacht worden.

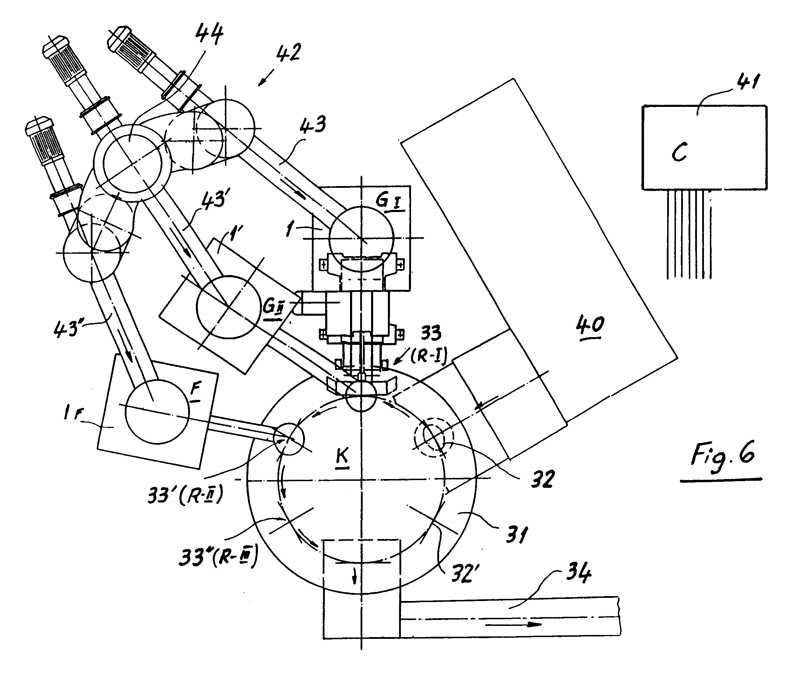

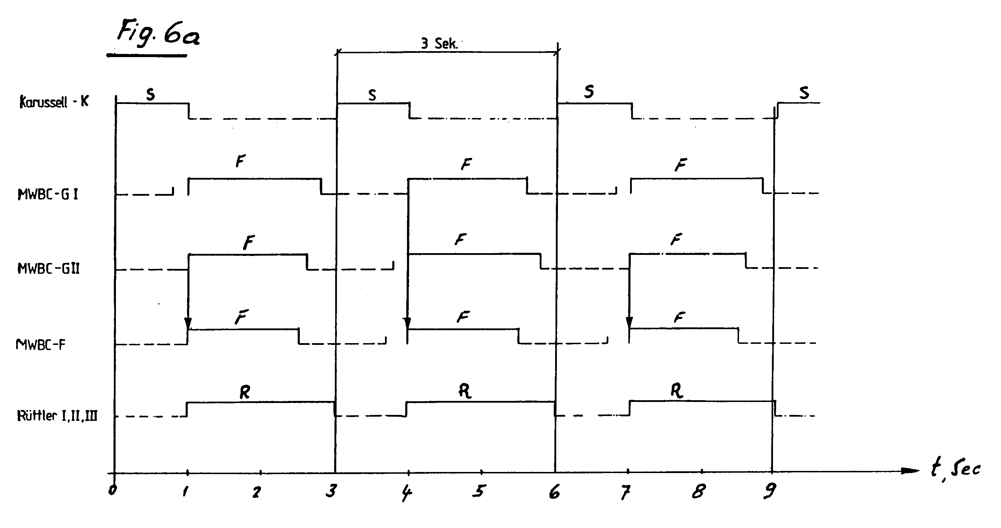

In der Figur 6 ist schematisch eine komplette Absackanlage dargestellt. Dabei werden die Säcke von einem Anhängeautomat 40 an den Fliessbefüllstutzen 32 des Absackkarussells 31 angehängt. Die Sackfüllung wird abwechselnd von der Schüttwaage 1, respektiv 1' erstellt, wobei die Nachfüllung - Abfüllung wechselweise erfolgt. Die Feindosierung wird über einen Rechner 41 gesteuert und ein entsprechender Dosierbefehl an eine Feindosierwaage, welche ebenfalls als Differentialdosierwaage ausgestaltet ist, gegeben. Über den Rechner 41 kann ebenfalls eine Schüttgutdosierung über Dosierschnecken 43, 43', respektiv 43'' von einem Verteiler 44 aus, erfolgen. Das Absackkarussell ist als 6-Stutzenkarussell ausgebildet, wobei der sechste, 32', für eine Anhängung der Säcke von Hand vorgesehen ist.

In der Figur 6a ist der koordinierte Funktionsablauf der in Figur 6 gezeigten Absackeinrichtung dargestellt analog der Figur 2a. Dabei bedeuten K = Karussell; MWBC-GI = Differential-Absackwaage, Grobstrom I; MWBC-GII = Differential-Absackwaage, Grobstrom II; MWBC-F = Differential-Absackwaage, Feinstrom; R = Rüttler.

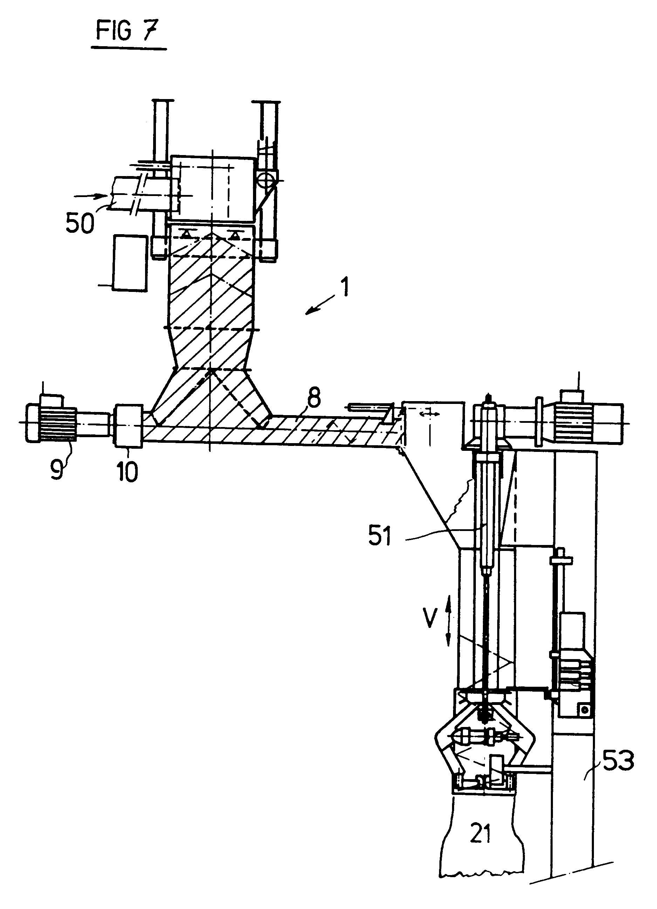

In der Figur 7 ist eine weitere, etwas komfortablere Ausführungsform einer sogenannten Sackpackmaschine dargestellt, wobei es sich um einen Einzelabsackstutzen handelt. Ein einzelner Sack 21 wird analog zu der Figur 1 angehängt, wobei ein teleskopartiger Sackstutzen eine Vertikalbewegung V ausführt, womit in dem Sack 21 jegliche Staubbildung vermieden werden kann. Die Füllung erfolgt hier über eine angetriebene Füllschnecke 50. Die Vertikalbewegung erfolgt über einen Pneumatikzylinder 51. Diese als Sackpackmaschine bekannte Absackeinrichtung ist hier über eine Stütze 53 auf den Boden abgestützt, analog zu der Figur 1. Für die Bewegungsabläufe werden von der Bedienungsperson über ein Eingabegerät die gewünschten Daten vorgegeben. Ein Absackspiel läuft dann in der Folge über ein Steuergerät 54, respektiv die entsprechende Waagensteuerung 55 ab.

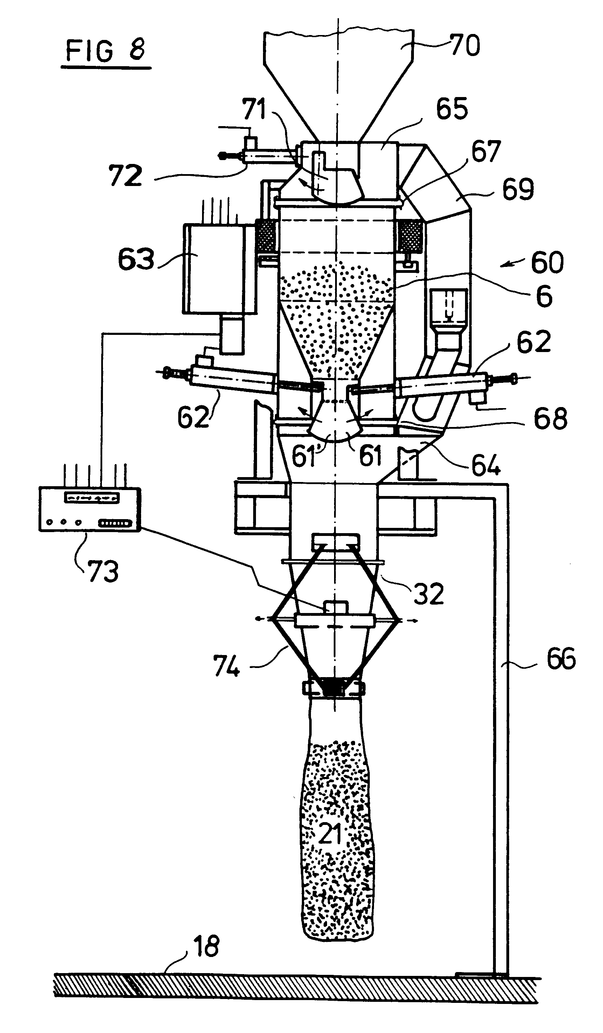

In der Figur 8 ist anstelle der Differentialwaage 1 der Figur 1 mit Zwangsaustrag eine Differentialwaage 60 für freifliessfähige Güter mit einstellbarem Austragdosierschieber 61, 61' dargestellt. Dabei können über Pneumatikzylinder 62 sowie die Waagensteuerung 63 verschiedene Dosierstellungen gewählt werden, um ein rasches und doch optimales Füllen der Säcke zu erhalten. Es entstehen nun einige sehr interessante kombinatorische Effekte. Ein Auffangtrichter 64 ist als eine Baueinheit mit dem Absackstutzen 32 ausgebildet. Beide Teile sind wie bin Speisekopf 65 über eine Stütze 66 auf dem Fussboden 18 fest abgestützt. Der Wägebehälter 6 weist oben und unten im Bereich von Gummimanschetten 67, respektiv 68 Querschnittsgleichheit auch mit den festen Übergangsstücken auf. Über ein Luftausgleichsrohr 69 wird nun alle unten im Sack verdrängte Luft grossquerschnittig nach oben geleitet, so dass hier weder Staub- noch Differenzdruckprobleme zwischen oben und unten entstehen.

Im Speisekopf 65 ist unter einer Trimelle 70 ein steuerbarer Schieber 71 angeordnet, welcher über einen Pneumatikzylinder 72 betätigt wird. Die Waagenelektronik ist direkt an einen Steuerkasten 73 angeschlossen, von welchem aus die Hauptarbeitsbefehle gegeben werden, so auch an eine teilautomatische Sackklemmvorrichtung 74.

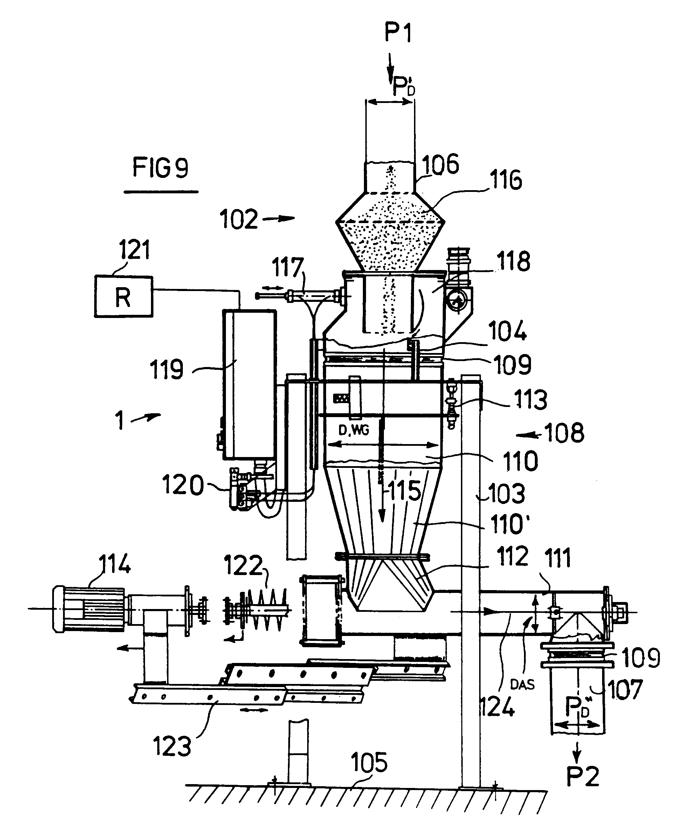

In der Folge wird nun auf die Figur 9 Bezug genommen. Der Produktionsstrom P1 tritt senkrecht in eine Differentialwaage 1 für schwerfliessfähige Güter oben ein, und verlässt diese unten wiederum als P2. Die Durchflussmessvorrichtung weist einen Speisekopf 102 auf, der mit einer Plattform 103 über Konsolen 104 fest verbunden und auf den Boden 105 abgestützt ist. Ein Zulaufrohr 106 ebenso wie ein Ableitungsrohr 107 sind ortsfest. Der Wägeteil 108 ist gegenüber dem Speisekopf 102 sowie gegenüber dem Ableitungsrohr 107 je über eine flexible Gummimanschette 109. staubdicht verbunden. Das Wägeteil 108 besteht aus einem aufrechten Waagenbehälter 110, welcher im unteren Teil eine leichte konische Verjüngung 110' aufweist. Der Waagebehälter 110 und die konische Verjüngung sind als runde Rohrform gestaltet. Zwischen dem Wagenbehälter 110 und einer Austragschnecke 111 ist ein Überleitstück 112 angeordnet, das den Übergang von der aufrechten Rohrform des Waagebehälters 110 in eine horizontale Rohrform der Austragschnecke 111 produktflusstechnisch optimal sicherstellt. Wie in der Figur 1 weist das Überleitstück 112 von oben nach unten einen etwa konstanten Querschnitt auf, und hat bei dem Ausführungsbeispiel eine Form von rund zu rechteckig. Das Wägeteil 108 ist in Umfangsrichtung an zum Beispiel drei Gewichtsmesswertaufnehmer 113 an der Plattform 103 aufgehängt. Sehr interessant ist die Aufhängung des ganzen Wägeteiles 108 mit Einschluss eines Antriebsmotores 114, so dass der Antriebsmotor 114 und die Austragschnecke 111 in je eine entgegengesetzte Richtung über das Wägeteil 108 hinausragen, und in einem gewissen Umfang bezüglich einer Mittelachse 115 einander das Gleichgewicht halten. Unmittelbar an das Zulaufrohr 106 befindet sich ein Vorbunker 116, der von einem Pneumatikzylinder 117 und einer Bodenklappe 118 über eine elektronische Steuerung 119, respektiv eine pneumatische Signalumformung 120 nach wählbarem Programm steuerbar ist, wobei Sollwerte für die Produktaustragung von einem externen Rechner 121 und die Istwert-Gewichtssignale von dem Gewichtsmesswertaufnehmer 113 gewonnen werden.

Der Vorbunker weist weniger als 50 % des maximalen Fassungsvermögens des Waagenbehälters 110 auf, bevorzugt etwa 30 % bis 90 %. Damit wird aber ganz bewusst von der konventionellen Anwendung einer Differentialwaage auch hier abgewichen, da für die Füllung des Waagenbehälters nur ein Teil vorspeicherbar ist, damit der Zulauf wägetechnisch ebenfalls erfassbar ist, was für die Erfassung eines Produktionsstromes wichtig ist, wenn nicht zusätzliche Regelgeräte für den Zulauf noch in Kauf genommen werden.

Der Waagenbehälter weist etwa eine doppelte Höhe seines Durchmessers auf, wobei der Durchmesser 0,3 bis 0,6 m betragen kann. Die Rohrschnecke weist hierzu einen Durchmesser von 1,100 bis 0,250 m auf, so dass ein mittleres Verhältnis von Waagenbehälterquerschnitt zu Rohrschneckenquerschnitt von etwa 1 : 10 entsteht.

In der Figur 9 ist noch ein weiterer, besonders interessanter Ausgestaltungsgedanke dargestellt, indem der Antriebsmotor 114 mit oder ohne angeflanschter Austragschneckenwelle 122 über einen Auszug 123 schubladenartig in Richtung der Achse 124 der Austragschnecke 111 ausziehbar ist. Dies erlaubt ganz besonders hohen Ansprüchen an die Reinhaltung des Produktweges gerecht zu werden.

In dem aufrechten Wagenbehälter 110 senkt sich das Produkt stetig in senkrechter Richtung ab, wird mit dem Überleitteil 112 direkt in dem Einzug der Austragschneckenwelle 122 geführt und horizontal von dem Waagebehälter 110 ausgetragen und wiederum senkrecht über das Ableitungsrohr 7, messtechnisch neu kontrolliert, stetig abgegeben.

## Patentansprüche

1. Verfahren zum Absacken vorgegebener Schüttgut-Füllgewichte aus einem Wägebehälter (6,110) in Transportgebinde (21), insbesondere in Säcke (21), dadurch gekennzeichnet daß die aus dem Wägebehälter (6,110) in die Transportgebinde (21) jeweils ausgetragenen Schüttgutmengen über eine differentielle Gewichtsabnahme des Wägebehälters (6,110) gravimetrisch ermittelt werden und dabei der Schüttgutmengen-Austrag auf das vorgegebene Schüttgut-Füllgewicht gesteuert wird.

2. Verfahren nach Anspruch 1, dadurch gekennzeichnet, daß der Wägebehälter (6,110) nach jeder oder nach mehreren Absackungen nachgefüllt wird, insbesondere mit 1,5 bis 5 Sackfüllungen.

3. Verfahren nach einem der vorstehenden Ansprüche, dadurch gekennzeichnet, daß das ausgetragene Schüttgut als Dichtstrom abgesackt wird.

4. Schüttgut-Absackvorrichtung mit einer Waage (1,1',108) und einer Steuervorrichtung welche vorgegebene Schüttgut-Füllmengen aus einem Wägebehälter (6,110) in Transportgebinde (21) austrägt, dadurch gekennzeichnet, daß die Waage (1,1',108) als gesteuerte Differential-Waage (1,1',108) ausgelegt ist, welche die aus dem Wägebehälter (6,110) in die Transportgebinde (21) jeweils ausgetragenen Schüttgutmengen über eine differentielle Gewichtsabnahme des Wägebehälters (6,110) gravimetrisch erfaßt und dabei den Schüttgutmengen-Austrag auf das vorgegebene Schüttgut-Füllgewicht steuert (8, 11; 61,111,121).

5. Absackvorrichtung nach Anspruch 4, dadurch gekennzeichnet, daß sie als Absackkarussell (31) ausgelegt ist.

6. Absackvorrichtung nach Anspruch 5, dadurch gekennzeichnet, daß, die Differentialwaage (1,108) zur Übergabe vorbestimmter Portionen über einen Absackstutzen bzw. Fließ-Befüllstutzen (32,32',32'') im Zyklus des Absackkarussells (31) ausgelegt ist.

7. Absackvorrichtung nach Anspruch 6, dadurch gekennzeichnet daß, einer Fließ-Befüllstutzen Position zwei Differentialwaagen (1, 1') zugeordnet sind.

8. Absackvorrichtung nach einem der Ansprüche 5 bis 7, dadurch gekennzeichnet, daß einer weiteren Fließ-Befüllstutzenposition eine weitere gesteuerte Differentialwaage (1) zugeordnet ist.

9. Absackvorrichtung nach Anspruch 8, dadurch gekennzeichnet, daß die wenigstens beiden Differentialwaagen (1,1') derart aufeinander abgestimmt sind, daß sie zwei sich zum vorgegebenen Schüttgut-Füllgewicht addierende Portionen in das Transport-Gebinde (21) austragen, wobei die erste Portion als Grobstrom (GI,GII) und die zweite als Feinstrom (GF) ausgetragen wird.

10. Absackvorrichtung nach einem der Ansprüche 4 bis 9, dadurch gekennzeichnet, daß die Steuervorrichtung (8,11,61,111,121) wenigstens einen steuerbaren Schieber (61,61') aufweist.

11. Absackvorrichtung nach einem der Ansprüche 4 bis 9, dadurch gekennzeichnet, daß die Steuervorrichtung (8,11,61,111,121) Zwangsaustrageelemente (8), insbesondere Austrageschnecken (8), aufweist.

12. Absackvorrichtung nach einem der Ansprüche 4 bis 11, dadurch gekennzeichnet, daß der Ausgang (16) der Steinervorrichtung (8,11,61,111,121) in den als Fließ-Befüllstutzen ausgebildeten Absackstutzen (32,32',32'') einer Sackanhängevorrichtung (20,40,74) mündet.

13. Absackvorrichtung nach Anspruch 12, dadurch gekennzeichnet, daß der Fließbefüllstutzen (32,32',32'') einen freien Durchtrittsquerschnitt aufweist, der etwa dem Querschnitt des Ausgangs (16) der Steuervorrichtung (8,11,61,111,121) entspricht oder kleiner ist.

14. Absackvorrichtung nach einem der Ansprüche 11 bis 13, dadurch gekennzeichnet, daß am Ausgang (16) der Steuervorrichtung (8,11,61,111,121) eine Verschließeinrichtung (11,15) angeordnet ist.

15. Absackvorrichtung nach einem der Ansprüche 4 bis 14, dadurch gekennzeichnet, daß sie zum Abfüllen von Produkten mit ungünstigem Fließverhalten ausgelegt ist, wobei
a) die Differentialwaage (1,108) einen aufrechten Wägebehälter (6,110) mit Differential-Wägeelementen (4,113) umfaßt;
b) die Steuervorrichtung (8,11,61) eine im wesentlichen horizontal ausgerichtete, drehzahlsteuerbare Austrageschnecke (8,111) mit einem in den Absackstutzen (17,19,32,32',32'') mündenden Ausgang (16) umfaßt; und
c) zwischen Wägebehälter (6,110) und Austrageschnecke (8,111) ein Überleitstück (112) angeordnet ist.

## Claims

1. Method for the bagging of predetermined bulk material fill weights from a weighing receptacle (6, 110) into transport containers (21), more particularly into bags (21), characterised in that the bulk material quantities discharged respectively from the weighing receptacle (6, 110) into the transport containers (21) are gravimetrically ascertained via a differential weight decrease of the weighing receptacle (6, 110), and the bulk material quantity discharge is controlled to the predetermined bulk material fill weight.

2. Method according to claim 1, characterised in that the weighing receptacle (6, 110) is replenished after each or after a plurality of bagging operations, more particularly with 1.5 to 5 bag contents quantities.

3. Method according to one of the preceding claims, characterised in that the discharged bulk material is bagged as a dense phase flow.

4. Bulk material bagging apparatus with a weigher (1, 1', 108) and with a control apparatus which discharges predetermined bulk material fill quantities from a weighing receptacle (6, 110) into transport containers (21), characterised in that the weigher (1, 1', 108) is arranged as a controlled differential weigher (1, 1', 108) which gravimetrically monitors via a differential weight decrease of the weighing receptacle (6, 110) the bulk material quantities which are respectively discharged from the weighing receptacle (6, 110) into the transport containers (21), and also controls the bulk material quantity discharge to the given bulk material fill weight (8, 11; 61, 111, 121).

5. Bagging apparatus according to claim 4, characterised in that it is constructed as a bagging turntable (31).

6. Bagging apparatus according to claim 5, characterised in that the differential weigher (1, 108) is designed for transferring predetermined batches via a bagging nozzle or flow filling nozzle (32, 32', 32'') at the cycle of the bagging turntable (31).

7. Bagging apparatus according to claim 6, characterised in that two differential weighers (1, 1') are associated with a flow filling nozzle station.

8. Bagging apparatus according to one of claims 5 to 7, characterised in that a further controlled differential weigher (1) is associated with a further flow filling nozzle station.

9. Bagging apparatus according to claim 8, characterised in that the at least two differential weighers (1, 1') are so adjusted to one another that they discharge into the transport container (21) two batches which add up to make the predetermined bulk material fill weight, the first batch being discharged as a rough flow (GI, GII) and the second as a fine flow (GF).

10. Bagging apparatus according to one of claims 4 to 9, characterised in that the control apparatus (8, 11, 61, 111, 121) has at least one controllable slide valve (61,61'),

11. Bagging apparatus according to one of claims 4 to 9, characterised in that the control apparatus (8, 11, 61, 111, 121) comprises forced-discharge elements (8), more particularly discharge worms (8).

12. Bagging apparatus according to one of claims 4 to 11, characterised in that the outlet (16) of the control apparatus (8, 11, 61, 111, 121) opens into the bagging nozzle (32, 32', 32'') of a bag attaching or suspending device (20, 40, 74), said nozzle being constructed as a flow filling nozzle.

13. Bagging apparatus according to claim 12, characterised in that the flow filling nozzle (32, 32', 32'') has a free throughflow cross-section which is smaller than or corresponds approximately to the cross-section of the outlet (16) of the control apparatus (8, 11, 61, 111, 121).

14. Bagging apparatus according to one of claims 11 to 13, characterised in that a closing device (11, 15) is arranged at the outlet (16) of the control apparatus (8, 11, 61, 111, 121).

15. Bagging apparatus according to one of claims 4 to 14, characterised in that it is designed for the filling of products which have disadvantageous flow properties,
a) the differential weigher (1, 108) comprising an upright weighing receptacle (6, 110) with differential weighing elements (4, 113);
b) the control apparatus (8, 11, 61) comprising a substantially horizontally disposed, rotational-speed-controllable discharge worm (8, 111) with an outlet (16) opening into the bagging nozzle (17, 19, 32, 32', 32''); and
c) a transition piece (112) being arranged between weighing receptacle (6, 110) and discharge worm (8, 111).

## Revendications

1. Dispositif pour l'ensachage de poids de remplissage prédéfinis de produit en vrac provenant d'un conteneur de pesée (6, 110) dans des emballages de transport (21), notamment dans des sacs (21), caractérisé en ce que les quantités de produit en vrac respectivement déchargées du conteneur de pesée (6, 110) dans les emballages de transport (21) sont calculées par gravimétrie au moyen d'une différence de poids en moins du conteneur de pesée (6, 110) et la quantité versée du produit en vrac est contrôlée par rapport au poids de remplissage prédéfini du produit en vrac.

2. Méthode selon la revendication 1, caractérisée en ce que le conteneur de pesée (6, 110) est rempli après un ou plusieurs ensachages, notamment avec 1,5 à 5 charges de sac.

3. Méthode selon l'une quelconque des revendications ci-dessus, caractérisée en ce que le produit en vrac déchargé est ensaché sous la forme d'un flux dense.

4. Dispositif d'ensachage pour produit en vrac équipé d'une balance (1, 108) et d'un dispositif de commande qui charge des quantités prédéfinies de remplissage d'un conteneur de pesée (6, 110) dans des emballages de transport (21), caractérisé en ce que la balance (1, 108) est conçue comme une balance différentielle (1, 1', 108) commandée, laquelle enregistre par gravimétrie les quantités de produit en vrac respectivement déchargées du conteneur de pesée (6, 110) dans les emballages de transport (21) au moyen d'une différence de poids en moins du conteneur de pesée (6, 110) et commande alors la quantité versée du produit en vrac par rapport au poids de remplissage prédéfini du produit en vrac (8, 11; 61, 111, 121).

5. Dispositif d'ensachage selon la revendication 4, caractérisé en ce qu'il est conçu comme un carrousel d'ensachage (31).

6. Dispositif d'ensachage selon la revendication 4, caractérisé en ce que la balance différentielle (1, 168) est conçue pour le déversement de portions prédéfinies par une tubulure d'ensachage / tubulure de remplissage en continu (32, 32', 32'''') dans le cycle du carrousel d'ensachage (31).

7. Dispositif d'ensachage selon la revendication 6, caractérisé en ce que deux balances différentielles (1, 1') sont affectées à une position de tubulure de remplissage en continu.

8. Dispositif d'ensachage selon l'une quelconque des revendications 5 à 7, caractérisé en ce qu'une autre balance différentielle (1) commandée est attribuée à une autre position de tubulure de remplissage en continu.

9. Dispositif d'ensachage selon la revendication 8, caractérisé en ce que les au moins deux balances différentielles (1, 1') sont accordées entre elles de telle manière qu'elles déchargent deux portions s'ajoutant au poids de remplissage prédéfini du produit en vrac dans l'emballage de transport (21), la première portion étant évacuée sous la forme d'un flux grossier (GI,GII) et la deuxième sous la forme d'un flux fin (GF).

10. Dispositif d'ensachage selon l'une quelconque des revendications 4 à 9, caractérisé en ce que le dispositif de commande (8,11,61,111,121) présente au moins un coulisseau (61,61') contrôlable.

11. Dispositif d'ensachage selon l'une quelconque des revendications 4 à 9, caractérisé en ce que le dispositif de commande (8,11,61,111,121) présente des éléments d'évacuation forcée (8), notamment des vis d'évacuation (8).

12. Dispositif d'ensachage selon l'une quelconque des revendications 4 à 11, caractérisé en ce que la sortie (16) du dispositif de commande (8,,11,61,111,121) débouche dans la tubulure d'ensachage (32,32',32'''') conçue comme une tubulure d'ensachage en continu d'un dispositif d'accrochage de sacs (20,40,74).

13. Dispositif d'ensachage selon la revendication 12, caractérisé en ce que la tubulure de remplissage en continu (32,32',32'') présente une section de passage libre qui correspond à peu près à la section transversale de la sortie (16) du dispositif de commande (8,11,61,111,121) ou est inférieure.

14. Dispositif d'ensachage selon l'une quelconque des revendications 11 à 13, caractérisé en ce qu'un système d'obturation (11,15) est disposé à la sortie (16) du dispositif de commande (8,11,61,111,121).

15. Dispositif d'ensachage selon l'une quelconque des revendications 4 à 14, caractérisé en ce qu'il est conçu pour le transvasement de produits avec une viscoélasticité défavorable
a) la balance différentielle (1, 108) comprenant un conteneur de pesée (6,110) vertical avec des éléments de pesée différentiels (4,113);
b) le dispositif de commande (8,11,61) comprenant une vis d'évacuation (8,111) orientée presque à l'horizontale et à vitesse réglable avec une sortie (16) débouchant dans la tubulure d'ensachage (17,19,32,32',32''); et
c) et une pièce de transition (112) étant disposée entre le conteneur de pesée (6,110) et la vis d'évacuation (8,111).
